# EUROPEAN PATENT APPLICATION

(11) **EP 4 556 102 A1**
(43) Date of publication of application: **21.05.2025**
(21) Application number: 24167881.2
(22) Date of filing: 29.03.2024
(51) Int. Cl.: B01D 53/62, C01B 32/50, C01B 21/24, F23J 15/00, B01J 20/04

(54) **METHOD OF CAPTURING CARBON DIOXIDE**

(30) Priority: 14.11.2023 TW 112143859
(71) Applicant: Industrial Technology Research Institute, 310401 Hsinchu (TW)
(72) Inventor: LIU, Chiung-Fang, 300 Hsinchu City (TW); CHEN, Yu-Ming, 111 Taipei City (TW); CHANG, Ming-Hui, 310 Hsinchu County (TW)
(74) Representative: Bandpay & Greuter

(57) **Abstract**

A method of capturing carbon dioxide, including providing a particle containing magnesium oxide, calcium oxide, or a combination thereof; and providing a mixture gas to contact the particle, wherein the mixture gas includes water vapor, carbon dioxide, and nitrogen oxide, and the particle captures the carbon dioxide to form a carbonated particle and a treated gas. The mixture gas has a relative humidity of 25% to 95%, a nitrogen oxide concentration of 20 ppm to 2000 ppm, and a carbon dioxide concentration of 0.05% to 15%.

## Description

### TECHNICAL FIELD

The technical field relates to a method of capturing carbon dioxide.

### BACKGROUND

The steel industry is one of the most important industries in the world, and its products are irreplaceable, directly impacting people's livelihoods, as well as driving industry and contributing to national defense. Global annual crude steel production is about 1.6 billion tons, and its CO₂ emissions account for 6-7% of the total CO₂ emissions worldwide (following only the power-generation industry and the cement industry). Capturing the carbon dioxide produced by the steel industry is an important issue in the overall goal of reducing carbon emission.

Most of the current technologies being used to capture carbon dioxide have low carbon fixation efficiency (<35%), and require additional pretreatment or even modification of the particles used to adsorb or capture carbon dioxide at a high temperature or pressure. Accordingly, an easy technology of capturing carbon dioxide is called for to lower the cost of capturing carbon dioxide generated by the steel industry.

### SUMMARY

One embodiment of the disclosure provides a method of capturing carbon dioxide, including providing a particle containing magnesium oxide, calcium oxide, or a combination thereof; and providing a mixture gas to contact the particle, wherein the mixture gas includes water vapor, carbon dioxide, and nitrogen oxide, and the particle captures the carbon dioxide to form a carbonated particle and a treated gas, wherein the mixture gas has a relative humidity of 25% to 95%, a nitrogen oxide concentration of 20 ppm to 2000 ppm (0.002vol% to 0.2 vol %), and a carbon dioxide concentration of 0.05% to 15%.

In some embodiments, the mixture gas contacts the particle at a temperature of 20°C to 100°C under a pressure of 1 atm to 1.8 atm corresponding to 101 325 to 182 385 Pa.

In some embodiments, the particle reacted at the different CO₂ concentration of tail gas includes (a) magnesium carbonate, calcium carbonate, or a combination thereof, (b) magnesium nitrite, calcium nitrite, or a combination thereof, and (c) magnesium hydroxide, calcium hydroxide, or a combination thereof.

In some embodiments, the mixture gas further includes sulfur dioxide, and the mixture gas has a sulfur dioxide concentration of 20 ppm to 500 ppm.

In some embodiments, the carbonated particle further includes magnesium sulfite hydrate, calcium sulfite hydrate, or a combination thereof.

In some embodiments, the mixture gas includes factory exhaust gas, power plant flue gas, incineration plant exhaust gas, or metallurgy industry flue gas.

In some embodiments, the particle includes 2 wt% to 15 wt% of magnesium oxide, 30 wt% to 62 wt% of calcium oxide, or a combination thereof.

In some embodiments, the particle includes steelmaking slag.

In some embodiments, the method further includes utilizing the carbonated particle in cement or concrete.

A detailed description is given in the following embodiments.

### Detailed Description

In the following detailed description, for purposes of explanation, numerous specific details are set forth in order to provide a thorough understanding of the disclosed embodiments. It will be apparent, however, that one or more embodiments may be practiced without these specific details.

One embodiment of the disclosure provides a method of capturing carbon dioxide, including providing a particle containing magnesium oxide, calcium oxide, or a combination thereof. In some embodiments, the particle includes 2 wt% to 15 wt% of magnesium oxide, 30 wt% to 62 wt% of calcium oxide, or a combination thereof, and has a particle size of 10 micrometers to 1000 micrometers (µm). For example, the particle may include steel slag. Note that the particle can be directly used without modification to capture carbon dioxide in the mixture gas, thereby decreasing the cost of capturing carbon dioxide.

Subsequently, a mixture gas is provided to contact the particle, and the mixture gas includes water vapor, carbon dioxide, and nitrogen oxide. The particle may capture the carbon dioxide to form a carbonated particle and a treated gas. In some embodiments, the mixture gas has a relative humidity of 25% to 95%, and a nitrogen oxide concentration of 20 ppm to 2000 ppm. The water vapor and the nitrogen oxide are necessary for the mixture gas, which may help the magnesium oxide, calcium oxide, or a combination thereof in the particle form magnesium hydroxide, calcium hydroxide, or a combination thereof, thereby enhancing the effect of the particle in capturing carbon dioxide. If the relative humidity of the mixture gas is too low, the dissolution amount of CO₂ the dissociation amount of calcium and magnesium will be low. If the relative humidity of the mixture gas is too high, it will exceed the water vapor dew point to condense the water vapor, and the gas-solid reaction will not be easy to perform. If the nitrogen oxide concentration is too low, the nitrite salt will not be easily formed, the aqueous layer of the particle will have an insufficient adsorption amount, and the carbonation efficiency will be low. If the concentration of nitrogen oxides is too high, it may lead to excessive deliquescent salts, adsorbing too much water on the surface of the particles, and forming a slurry, and will block the carbonation reaction channel to reduce the carbonation efficiency. It should be understood that the water vapor can be introduced into the mixture gas to adjust the relative humidity of the mixture gas. On the other hand, nitrogen oxide can be added to the mixture gas to increase the nitrogen oxide concentration in the mixture gas. The mixture gas can be diluted to by air to lower the nitrogen oxide concentration in the mixture gas. In some embodiments, the mixture gas has a carbon dioxide concentration of 0.05% to 15%. If the carbon dioxide concentration is too low, it will take a longer reaction period to achieve the carbonation reaction. If the carbon dioxide concentration is too high, the surface of the particle will be easily covered by the formed carbonate to inhibit the carbonation reaction of the calcium oxide or magnesium oxide in the particles, such that the utilization ratio of the particle will be too low. The mixture gas can be diluted by air to decrease the carbon dioxide concentration in the mixture gas.

In some embodiments, the mixture gas contacts the particle at a temperature of 20°C to 100°C under a pressure of 1 atm to 1.8 atm. If the temperature is too low, the energy barrier of the carbonation reaction cannot be overcome, such that the carbonation reaction will be difficult to perform. If the temperature is too high, the high temperature will inhibit the reaction due to the total carbonation reaction of the particle is an exothermic reaction. If the pressure is too low, the particle will flow back to an exhaust gas system due to the pressure difference of a connecting pipe between the mixture gas and the reactor, thereby blocking the carbonation reaction. If the pressure is too high, it will require an additional pressurizing equipment to increase the equipment cost. In general, the mixture gas may contact the particle under a normal pressure to capture carbon dioxide in the mixture gas, thereby saving the cost of increasing the pressure. In some embodiments, the carbonated particle includes (a) magnesium carbonate, calcium carbonate, or a combination thereof, (b) magnesium nitrite, calcium nitrite, or a combination thereof, and (c) magnesium hydroxide, calcium hydroxide, or a combination thereof. The particle adsorb the water vapor to transfer CaO and MgO to Ca(OH)₂ and Mg(OH)₂. The mixture gas contacts the particle to firstly generate magnesium nitride, calcium nitrite, or a combination thereof, which may help the magnesium oxide, calcium oxide, or a combination thereof form magnesium hydroxide, calcium hydroxide, or a combination thereof. The magnesium hydroxide, calcium hydroxide, or a combination thereof may capture carbon dioxide to form magnesium carbonate, calcium carbonate, or a combination thereof. The carbonated particle formed by capturing carbon dioxide is analyzed by XRD (X-ray Diffraction), which not only includes carbonate but also includes a part of hydroxide and nitrite (which are not completely consumed).

In some embodiments, the mixture gas further includes sulfur dioxide, and the mixture gas has a sulfur dioxide concentration of 20 ppm to 500 ppm. A little amount of sulfur dioxide (e.g. 20 ppm to 250 ppm) in the mixture gas is beneficial to slightly improve the efficiency of the particle in capturing carbon dioxide. A medium amount of sulfur dioxide (e.g. 250 ppm to 500 ppm) in the mixture gas may decrease the efficiency of the efficiency of the particle in capturing carbon dioxide (but is tolerable). Excess amount of sulfur dioxide (e.g. exceeding 600 ppm) in the mixture gas will greatly decrease the efficiency of the particle in capturing carbon dioxide. In other words, if the mixture gas includes a certain concentration of sulfur dioxide (e.g. 20 ppm to 500 ppm), it will not need to pre-treat the mixture gas to remove sulfur thereof, thereby decreasing the cost of capturing carbon dioxide. In these embodiments, the carbonated particles further includes magnesium sulfite hydrate (e.g. MgSO₃·0.5H₂O), calcium sulfite hydrate (e.g. CaSO₃·0.5H₂O), or a combination thereof. The sulfite hydrate present in the carbonated particle can be confirmed by XRD.

In some embodiments, the mixture gas includes factory exhaust gas, power plant flue gas, incineration plant exhaust gas, or metallurgy industry flue gas. It should be understood that if the mixture gas comes from the steel factory, the particle can be the steelmaking slag generated by the steel factory. As such, the cost of capturing carbon dioxide can be further decreased. In some embodiments, the method further includes utilizing the carbonated particle in cement or concrete. The carbonated particle is beneficial to strengthen the cement or concrete structure.

Below, exemplary embodiments will be described in detail so as to be easily realized by a person having ordinary knowledge in the art. The inventive concept may be embodied in various forms without being limited to the exemplary embodiments set forth herein.

### Examples

In following Examples, SO₂, NOₓ, O₂, CO₂, and N₂ in the mixture gas were provided by high pressure gas cylinders. The gases were provided by the gas cylinders, which were controlled by a pressure regulator, and their flow rate was measured by a mass flow meter. The mixture gas was formulated from standard concentration gas according to volume concentration requirements. The relative humidity of the water vapor in the mixture gas was adjusted according to the pressure and the temperature of the mixture gas.

In following Examples, the absorbent was evenly placed in a sample plate covered with quartz wool. The evaporator, stove, and heating belt thermostats were turned on, and each thermostat was gradually increased in sections to the desired temperature. The nitrogen flow was modulated. The nitrogen feed valve of the evaporator was turned on. The micro pump was turned on, and deionized water was injected into the evaporator. The sample pan perforated at the bottom was placed into the reactor, the designed reaction gas valve was turned to modulate the desired concentration and flow rate of the reaction gas, thereby contacting the reaction gas with the absorbent for a reaction period. After the reaction period was achieved, the reaction gas was discharged from a three-way valve, and the discharged reaction gas was treated by an absorption bottle and then exhausted. The micro pump was turned off, and the residual gas was purged by nitrogen. The carbonated particle was then taken to analyze its composition (molar fractions of contents).

### Example 1

A mixture gas having a carbon dioxide concentration of 3% (the other gas was nitrogen gas), a relative humidity of 30%, a temperature of 60°C, and a gas flow rate of 1 L/min was provided to contact an absorbent (e.g. 1 g of CaO particles) for 10 minutes to form carbonated particles. The molar fraction of sulfite salt (Xsi) in the carbonated particles was measured by iodine titration. The molar fractions of nitrite salt (X_{N1}), the nitrate salt (X_{N2}), and sulfate salt (X_{S2}) in the carbonated particles were measured by ion chromatography. The molar fraction of the hydroxide (X_{HL}) in the carbonated particles was measured by acid-base titration. The molar fraction of the carbonate salt was 1-X_{HL}-X_{S1}-X_{S2}-X_{N1}-X_{N2}. The carbonate salt in the carbonated particles had a molar fraction of 3%. In following Examples 2 to 10, the molar fractions of the contents in the carbonated particles were measured and calculated as Example 1.

A mixture gas having a carbon dioxide concentration of 3% (the other gas was nitrogen gas), a relative humidity of 50%, a temperature of 60°C, and a gas flow rate of 1 L/min was provided to contact an absorbent (e.g. 1 g of CaO particles) for 10 minutes to form carbonated particles. The carbonate salt in the carbonated particles had a molar fraction of 6%.

A mixture gas having a carbon dioxide concentration of 3% (the other gas was nitrogen gas), a relative humidity of 70%, a temperature of 60°C, and a gas flow rate of 1 L/min was provided to contact an absorbent (e.g. 1 g of CaO particles) for 10 minutes to form carbonated particles. The carbonate salt in the carbonated particles had a molar fraction of 10%.

A mixture gas having a carbon dioxide concentration of 3% (the other gas was nitrogen gas), a relative humidity of 80%, a temperature of 60°C, and a gas flow rate of 1 L/min was provided to contact an absorbent (e.g. 1 g of CaO particles) for 10 minutes to form carbonated particles. The carbonate salt in the carbonated particles had a molar fraction of 12%.

As known from Example 1, the higher relative humidity of the mixture gas resulted in the higher efficiency of CaO particles in capturing carbon dioxide.

### Example 2

A mixture gas having a carbon dioxide concentration of 3% (the other gas was nitrogen gas), a relative humidity of 30%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 9%.

A mixture gas having a carbon dioxide concentration of 3% (the other gas was nitrogen gas), a relative humidity of 50%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 22%.

A mixture gas having a carbon dioxide concentration of 3% (the other gas was nitrogen gas), a relative humidity of 70%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 28%.

A mixture gas having a carbon dioxide concentration of 3% (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 30%.

As known from Examples 1 and 2, the efficiency of Ca(OH)₂ in capturing carbon dioxide is higher than the efficiency of CaO in capturing carbon dioxide.

### Example 3

A mixture gas having a carbon dioxide concentration of 3%, an oxygen concentration of 5%, and a nitrogen oxide (NOₓ) concentration of 100 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 44%.

A mixture gas having a carbon dioxide concentration of 3%, an oxygen concentration of 5%, and a nitrogen oxide (NOₓ) concentration of 600 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 52%.

A mixture gas having a carbon dioxide concentration of 3%, an oxygen concentration of 5%, and a nitrogen oxide (NOₓ) concentration of 1000 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 54%.

As known from Example 3, the nitrogen oxide in the mixture gas was beneficial to increase the efficiency of the absorbent in capturing carbon dioxide.

### Example 4

A mixture gas having a carbon dioxide concentration of 3%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 54%.

A mixture gas having a carbon dioxide concentration of 3%, an oxygen concentration of 5%, a nitrogen oxide (NOx) concentration of 600 ppm, and a SO₂ concentration of 300 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 38%.

A mixture gas having a carbon dioxide concentration of 3%, an oxygen concentration of 5%, a nitrogen oxide (NOx) concentration of 600 ppm, and a SO₂ concentration of 500 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 18%.

A mixture gas having a carbon dioxide concentration of 3%, an oxygen concentration of 5%, a nitrogen oxide (NOx) concentration of 600 ppm, and a SO₂ concentration of 1000 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 4%.

As known from Example 4, a little amount of SO₂ (e.g. 100 ppm) in the mixture gas was beneficial to slightly improve the efficiency of the absorbent in capturing carbon dioxide. A medium amount of SO₂ (e.g. 300 ppm to 500 ppm) in the mixture gas would decrease the efficiency of the efficiency of the absorbent in capturing carbon dioxide (but was tolerable). Excess amount of SO₂ (e.g. 1000 ppm) in the mixture gas would greatly decrease the efficiency of the absorbent in capturing carbon dioxide.

### Example 5

A mixture gas having a carbon dioxide concentration of 0.05%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 25%.

A mixture gas having a carbon dioxide concentration of 1%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 52%.

A mixture gas having a carbon dioxide concentration of 3%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 54%.

A mixture gas having a carbon dioxide concentration of 6%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 55%.

A mixture gas having a carbon dioxide concentration of 12%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 53%.

As known from Example 5, the efficiencies of the absorbent in capturing carbon dioxide exceeding a certain concentration such as 1% were similar.

### Example 6

A mixture gas having a carbon dioxide concentration of 3%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 30°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 53%.

A mixture gas having a carbon dioxide concentration of 3%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 50°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 51%.

A mixture gas having a carbon dioxide concentration of 3%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 54%.

A mixture gas having a carbon dioxide concentration of 3%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 90°C, and a gas flow rate of 1 L/min was provided to contact an absorbent (e.g. 1 g of Ca(OH)₂ particles) for 10 minutes to form carbonated particles. The carbonate salt in the carbonated particles had a molar fraction of 50%.

As known from Example 6, the efficiencies of the absorbent in capturing carbon dioxide of the mixture gas at different temperatures were similar.

### Example 7

A mixture gas having an oxygen concentration of 5% and a nitrogen oxide (NOₓ) concentration of 600 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form treated particles. As known from XRD, the treated particles included calcium nitrite.

A mixture gas having a carbon dioxide concentration of 3%, an oxygen concentration of 5%, and a nitrogen oxide (NOₓ) concentration of 600 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. As shown in the XRD characteristic peaks (e.g. 2θ=23.23°, 29.59°, 36.14°, and 39.58°), the carbonated particles included calcium carbonate.

A mixture gas having a carbon dioxide concentration of 3%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. As shown in the XRD characteristic peaks (e.g. 2θ=16.34°, 28.54°, and 34.46°), the carbonated particles included calcium sulfite hydrate and calcium carbonate.

### Example 8

A mixture gas having a carbon dioxide concentration of 3%, an oxygen concentration of 5%, and a nitrogen oxide (NOₓ) concentration of 600 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. As known from SEM, the carbonated particles had a size of 0.01µm to 1 µm .

A mixture gas having a carbon dioxide concentration of 3%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Ca(OH)₂ particles) for 10 minutes to form carbonated particles. As known from SEM, the carbonated particles had a size of 0.01 µm to 1 µm.

### Example 9

A mixture gas having a carbon dioxide concentration of 0.05%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Mg(OH)₂ particles) for 10 minutes to form carbonated particles. The carbonate salt in the carbonated particles had a molar fraction of 13%.

A mixture gas having a carbon dioxide concentration of 1%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Mg(OH)₂ particles) for 10 minutes to form carbonated particles. The carbonate salt in the carbonated particles had a molar fraction of 30%.

A mixture gas having a carbon dioxide concentration of 3%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Mg(OH)₂ particles) for 10 minutes to form carbonated particles. The carbonate salt in the carbonated particles had a molar fraction of 35%.

A mixture gas having a carbon dioxide concentration of 6%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Mg(OH)₂ particles) for 10 minutes to form carbonated particles. The carbonate salt in the carbonated particles had a molar fraction of 38%.

A mixture gas having a carbon dioxide concentration of 12%, an oxygen concentration of 5%, a nitrogen oxide (NOₓ) concentration of 600 ppm, and a SO₂ concentration of 100 ppm (the other gas was nitrogen gas), a relative humidity of 80%, a temperature of 60°C, and a gas flow rate of 1 L/min was provided to contact an absorbent (e.g. 1 g of Mg(OH)₂ particles) for 10 minutes to form carbonated particles. The carbonate salt in the carbonated particles had a molar fraction of 39%.

As known from Example 9, the efficiencies of the absorbent in capturing carbon dioxide exceeding a certain concentration such as 1% were similar.

### Example 10

A mixture gas having an oxygen concentration of 5% and a nitrogen oxide (NOₓ) concentration of 600 ppm (the other gas was nitrogen gas), a relative humidity of 80%, a temperature of 60°C, and a gas flow rate of 1 L/min was provided to contact an absorbent (e.g. 1 g of steelmaking slag particles A containing 19.2 parts by weight of SiO₂, 6.0 parts by weight of Al₂O₃, 11.0 parts by weight of MgO, 52.1 parts by weight of CaO, and 2.2 parts by weight of Fe₂O₃) for 10 minutes to form treated particles. As known from thermogravimetric analysis (TGA), the treated particles had a thermogravimetric loss of Ca(OH)₂ and Mg(OH)₂ at 280°C and 400°C. As such, the mixture gas could cause CaO and MgO in the absorbent to generate Ca(OH)₂ and Mg(OH)₂ respectively.

### Example 11

A mixture gas having a carbon dioxide concentration of 1%, an oxygen concentration of 5%, a nitrogen oxide (NOₓ) concentration of 600 ppm, and a SO₂ concentration of 100 ppm (the other gas was nitrogen gas), a relative humidity of 70%, a temperature of 60°C, and a gas flow rate of 1 L/min was provided to contact an absorbent (e.g. 1 g of the steelmaking slag particles A in Example 10) for 10 minutes to form carbonated particles and a treated gas. The treated gas was analyzed by a carbon dioxide detection tube (Honeywell, Gastec Detector Tubes, Serial No. 2L) to know the carbon dioxide concentration thereof (0.30 %).

A mixture gas having a carbon dioxide concentration of 3%, an oxygen concentration of 5%, a nitrogen oxide (NOₓ) concentration of 600 ppm, and a SO₂ concentration of 100 ppm (the other gas was nitrogen gas), a relative humidity of 70%, a temperature of 60°C, and a gas flow rate of 1 L/min was provided to contact an absorbent (e.g. 1 g of the steelmaking slag particles A in Example 10) for 10 minutes to form carbonated particles and a treated gas. The treated gas was analyzed by the carbon dioxide detection tube to know the carbon dioxide concentration thereof (0.32 %).

A mixture gas having a carbon dioxide concentration of 6%, an oxygen concentration of 5%, a nitrogen oxide (NOₓ) concentration of 600 ppm, and a SO₂ concentration of 100 ppm (the other gas was nitrogen gas), a relative humidity of 70%, a temperature of 60°C, and a gas flow rate of 1 L/min was provided to contact an absorbent (e.g. 1 g of the steelmaking slag particles A in Example 10) for 10 minutes to form carbonated particles and a treated gas. The treated gas was analyzed by the carbon dioxide detection tube to know the carbon dioxide concentration thereof (0.43 %). The steelmaking slag particles A had a smooth surface before contacting the mixture gas, and the carbonated particles had a rough surface. The carbonated particles had a size of 0.01 µm to 1 µm .

As known from Example 11, the mixture gas could contact the steelmaking slag particles A to efficiently decrease the carbon dioxide concentration of the mixture gas.

### Example 12

A mixture gas having an oxygen concentration of 5% and a nitrogen oxide (NOₓ) concentration of 600 ppm (the other gas was nitrogen gas), a relative humidity of 80%, a temperature of 60°C, and a gas flow rate of 1 L/min was provided to contact an absorbent (e.g. 1 g of the steelmaking slag particles B containing 16.8 parts by weight of SiO₂, 8.2 parts by weight of Al₂O₃, 8.7 parts by weight of MgO, 62.3 parts by weight of CaO, and 1.8 parts by weight of Fe₂O₃) for 10 minutes to form treated particles. As known from thermogravimetric analysis (TGA), the treated particles had a thermogravimetric loss of Ca(OH)₂ and Mg(OH)₂ at 280°C and 400°C. As such, the mixture gas could cause CaO and MgO in the absorbent to generate Ca(OH)₂ and Mg(OH)₂ respectively.

### Example 13

A mixture gas having a carbon dioxide concentration of 1%, an oxygen concentration of 5%, a nitrogen oxide (NOₓ) concentration of 600 ppm, and a SO₂ concentration of 100 ppm (the other gas was nitrogen gas), a relative humidity of 70%, a temperature of 60°C, and a gas flow rate of 1 L/min was provided to contact an absorbent (e.g. 1 g of the steelmaking slag particles B in Example 12) for 10 minutes to form carbonated particles and a treated gas. The treated gas was analyzed by the carbon dioxide detection tube to know the carbon dioxide concentration thereof (0.35 %).

A mixture gas having a carbon dioxide concentration of 3%, an oxygen concentration of 5%, a nitrogen oxide (NOₓ) concentration of 600 ppm, and a SO₂ concentration of 100 ppm (the other gas was nitrogen gas), a relative humidity of 70%, a temperature of 60°C, and a gas flow rate of 1 L/min was provided to contact an absorbent (e.g. 1 g of the steelmaking slag particles B in Example 12) for 10 minutes to form carbonated particles and a treated gas. The treated gas was analyzed by the carbon dioxide detection tube to know the carbon dioxide concentration thereof (0.42 %).

A mixture gas having a carbon dioxide concentration of 6%, an oxygen concentration of 5%, a nitrogen oxide (NOₓ) concentration of 600 ppm, and a SO₂ concentration of 100 ppm (the other gas was nitrogen gas), a relative humidity of 70%, a temperature of 60°C, and a gas flow rate of 1 L/min was provided to contact an absorbent (e.g. 1 g of the steelmaking slag particles B in Example 12) for 10 minutes to form carbonated particles and a treated gas. The treated gas was analyzed by the carbon dioxide detection tube to know the carbon dioxide concentration thereof (0.40 %).

As known from Example 13, the mixture gas could contact the steelmaking slag particles B to efficiently decrease the carbon dioxide concentration of the mixture gas.

### Example 14

A traditional concrete was prepared as below: 240 g of cement, 128 g of furnace slag powder, and 32 parts by weight of fly ash were dry mixed for 1 minute. 277 g of 6/8 inch gravel, 649 g of 3/8 inch gravel, 600 g or coarse sand, and 255 g of fine sand were then added to the mixture and further dry mixed for 1 minute. 175 g of water was slowly added to the dry mixture and then stirred for 3 minutes. The mixture was placed in a mold for 1 day, and then demolded to obtain a sample. The sample was cured in the atmospheric environment for 28 days, and the compressive strength of the cured sample was measured as 291 kgf/cm².

A mixture gas having a carbon dioxide concentration of 3%, an oxygen concentration of 5%, a nitrogen oxide (NOₓ) concentration of 600 ppm, and a SO₂ concentration of 250 ppm (the other gas was nitrogen gas), a relative humidity of 80%, and a temperature of 60°C was provided to contact reducing slag particles (containing 19.2 parts by weight of SiO₂, 6.0 parts by weight of Al₂O₃, 11.0 parts by weight of MgO, 52.1 parts by weight of CaO, and 2.2 parts by weight of Fe₂O₃) to perform a carbonation reaction. 20 g of the carbonated product, 220 g of cement, 128 g of furnace slag powder, and 32 parts by weight of fly ash were dry mixed for 1 minute. 277 g of 6/8 inch gravel, 649 g of 3/8 inch gravel, 600 g or coarse sand, and 255 g of fine sand were then added to the mixture and further dry mixed for 1 minute. 175 g of water was slowly added to the dry mixture and then stirred for 3 minutes. The mixture was placed in a mold for 1 day, and then demolded to obtain a sample. The sample was cured in the atmospheric environment for 28 days, and the compressive strength of the cured sample was measured as 284 kgf/cm². Accordingly, parts of the cement could be replaced with the carbonated product to form a concrete with a similar property. The carbonated product of capturing carbon dioxide could be deposited on the pores or surface of the reducing slag particles, thereby strengthening the porous structure. In addition, the carbonate salts between particles were interconnected, which could specifically reduce the cement amount. The carbonated product had XRD characteristic peaks (e.g. 2θ=23.23°, 29.59°, 36.14°, and 39.58°).

It will be apparent to those skilled in the art that various modifications and variations can be made to the disclosed methods and materials. It is intended that the specification and examples be considered as exemplary only, with the true scope of the disclosure being indicated by the following claims and their equivalents.

## Claims

1. A method of capturing carbon dioxide, comprising:
providing a particle containing magnesium oxide, calcium oxide, or a combination thereof; and
providing a mixture gas to contact the particle, wherein the mixture gas comprises water vapor, carbon dioxide, and nitrogen oxide, and the particle captures the carbon dioxide to form a carbonated particle and a treated gas,
wherein the mixture gas has a relative humidity of 25% to 95%, a nitrogen oxide concentration of 20 ppm to 2000 ppm, and a carbon dioxide concentration of 0.05% to 15%.

2. The method as claimed in claim 1, wherein the mixture gas contacts the particle at a temperature of 20°C to 100°C under a pressure of 1 atm to 1.8 atm.

3. The method as claimed in claim 1 or 2, wherein the carbonated particle comprises (a) magnesium carbonate, calcium carbonate, or a combination thereof, (b) magnesium nitrite, calcium nitrite, or a combination thereof, and (c) magnesium hydroxide, calcium hydroxide, or a combination thereof.

4. The method as claimed in any one of claims 1 to 3, wherein the mixture gas further comprises sulfur dioxide, and the mixture gas has a sulfur dioxide concentration of 20 ppm to 500 ppm.

5. The method as claimed in claim 4, wherein the carbonated particle further comprises magnesium sulfite hydrate, calcium sulfite hydrate, or a combination thereof.

6. The method as claimed in any one of claims 1 to 5, wherein the mixture gas comprises factory exhaust gas, power plant flue gas, incineration plant exhaust gas, or metallurgy industry flue gas.

7. The method as claimed in any one of claims 1 to 6, wherein the particle comprises 2 wt% to 15 wt% of magnesium oxide, 30 wt% to 62 wt% of calcium oxide, or a combination thereof.

8. The method as claimed in any one of claims 1 to 7, wherein the particle comprises steelmaking slag.

9. The method as claimed in any one of claims 1 to 8, further comprising utilizing the carbonated particle in cement or concrete.
